# EUROPEAN PATENT APPLICATION

(11) **EP 4 564 587 A1**
(43) Date of publication of application: **04.06.2025**
(21) Application number: 23903663.5
(22) Date of filing: 04.08.2023
(51) Int. Cl.: H01M 50/59, H01M 50/588, H01M 50/517, H01M 50/507, H01M 50/251, H01M 50/209

(54) **BATTERY RACK**

(30) Priority: 12.12.2022 KR 20220172671
(71) Applicant: LG Energy Solution, Ltd., Seoul 07335 (KR)
(72) Inventor: PARK, Jung-Beom, Daejeon 34122 (KR); JUNG, Goan-Su, Daejeon 34122 (KR); NAMGOUNG, Hyeok, Daejeon 34122 (KR); LIM, Dae-Hoon, Daejeon 34122 (KR); JEONG, Ji-Won, Daejeon 34122 (KR); CHOI, Byung-Hyuk, Daejeon 34122 (KR); HONG, Seok-Hyun, Daejeon 34122 (KR)
(74) Representative: Plasseraud IP
(86) International application number: PCT/KR2023/011532
(87) International publication number: WO 2024/128459

(57) **Abstract**

A battery rack is disclosed. The battery rack according to an embodiment of the present disclosure includes a plurality of battery modules stacked along an up-down direction, each battery module including a coupling bar protruding frontwards; and a busbar movably coupled to the coupling bar of each of two adjacent battery modules among the plurality of battery modules along a front-rear direction, made of a metal and having flexibility.

## Description

### TECHNICAL FIELD

The present disclosure relates to a battery rack.

The present application claims priority to Korean Patent Application No. 10-2022-0172671 filed on December 12, 2022 in the Republic of Korea, the disclosure of which is incorporated herein by reference.

### BACKGROUND ART

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

A single secondary battery may be used, but in general, in many cases, a plurality of secondary batteries may be electrically connected in series and/or in parallel. In particular, the plurality of secondary batteries electrically connected to each other may be received in a module case to form a battery module. Additionally, a single battery module may be used, or at least two battery modules electrically connected in series and/or in parallel may form a higher level device such as a battery rack or a battery pack.

Recently, with the emerging issues such as a lack of power or eco-friendly energy, Energy Storage Systems (ESS) used to store power for later use are gaining attention. For example, one of methods for controlling power supply is smart grid systems. The power usage is not constant and can change at any time. Typically, the power usage sharply increases in the summer daytime due to the use of cooling devices and sharply decreases in the nighttime. From the perspective of power consumption, power consumption is not constant and may frequently change, but from the perspective of power supply, the amount of power produced can be controlled to some extent, but in reality, it is difficult to meet the amount of power required. Accordingly, power oversupply or power shortage may occur due to the inequality in power supply and power consumption, and to solve this problem, the smart grid systems may flexibly store and control power. The concept of smart grid systems is that power is stored in times or regions in which surplus power occurs and the stored power is supplied in times and regions in which power shortage occurs. One of the essential elements for building the smart grid systems may be energy storage systems for storing power. More recently, with the widespread use of electric vehicles, energy storage systems may be used in facilities for charging the electric vehicles, for example, charging stations.

In general, an energy storage system may include a plurality of battery containers to ensure high charge/discharge capacity. Additionally, each battery container may include a plurality of battery racks, and each battery rack may include a plurality of battery modules.

In many cases, after transport or movement of the battery container is completed, the battery modules are connected with a busbar. This is because, if the busbar is preassembled, the busbar may be damaged during the transport or delivery of the battery container, causing thermal events. However, this process requires a lot of efforts and time after the transport or movement of the battery container.

### SUMMARY

### Technical Problem

The present disclosure is designed to solve these and other problems.

The present disclosure is directed to providing a battery rack that may be transported or moved with battery modules connected with a busbar.

The present disclosure is further directed to providing the battery rack including the busbar capable of relieving or absorbing impacts occurring during the transport or movement of the battery rack.

The present disclosure is further directed to providing the battery rack in which a terminal of the battery module is insulated from the busbar during the transport or movement of the battery rack.

The present disclosure is further directed to providing the battery rack in which the terminal of the battery module is easily electrically connected to the busbar after the transport or movement of the battery rack.

### Technical Solution

To achieve the above-described objective, a battery rack according to an embodiment of the present disclosure includes a plurality of battery modules stacked in an up-down direction, each battery module including a coupling bar protruding frontwards; and a busbar movably coupled to the coupling bar of each of two adj acent battery modules among the plurality of battery modules in a front-rear direction, made of a metal and having flexibility.

Additionally, the busbar may include a plurality of first grooves in a direction perpendicular to a lengthwise direction of the busbar.

Additionally, the busbar may further include a plurality of second grooves in a direction perpendicular to the plurality of first grooves and extending along the lengthwise direction of the busbar.

Additionally, the plurality of first grooves may be formed in a front surface of the busbar.

Additionally, the busbar may further include a plurality of third grooves in a rear surface of the busbar in the direction perpendicular to the lengthwise direction of the busbar.

Additionally, the battery rack may further include a coil spring to provide a restoring force that pushes the busbar back.

Additionally, the battery module may include a terminal in an outer surface of the battery module and adjacent to the coupling bar.

Additionally, the busbar may contact the terminal, and be electrically connected to the terminal.

Additionally, the coupling bar may have screw threads, and the battery module may further include a nut in front of the coil spring and coupled to the screw threads.

Additionally, the battery rack may further include a support member between the nut and the coil spring.

Additionally, the support member may be a disc spring for providing the restoring force that pushes the coil spring back.

Additionally, the battery module may include a terminal in an outer surface of the battery module and adjacent to the coupling bar.

Additionally, the battery rack may further include an insulation sheet between the terminal and the busbar.

Additionally, the insulation sheet may include a first hole which allows the coupling bar to pass through; and a second hole adjacent to the first hole.

To achieve the above-described objective, a battery container according to the present disclosure includes the battery rack according to the present disclosure.

To achieve the above-described objective, an energy storage system according to the present disclosure includes the battery rack according to the present disclosure.

### Advantageous Effects

According to at least one of the embodiments of the present disclosure, it may be possible to provide the battery rack that may be transported or moved with the battery modules connected with the busbar.

According to at least one of the embodiments of the present disclosure, it may be possible to provide the battery rack including the busbar capable of relieving or absorbing impacts occurring during the transport or movement of the battery rack.

According to at least one of the embodiments of the present disclosure, it may be possible to provide the battery rack in which the terminal of the battery module is insulated from the busbar during the transport or movement of the battery rack.

According to at least one of the embodiments of the present disclosure, it may be possible to provide the battery rack in which the terminal of the battery module is easily electrically connected to the busbar after the transport or movement of the battery rack.

The present disclosure may have many other effects, and its description will be provided in each exemplary configuration, or regarding effects that can be easily inferred by those skilled in the art, the corresponding description is omitted.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a perspective view of a battery container according to an embodiment of the present disclosure.
FIG. 2 is a partial enlarged view of a battery rack according to an embodiment of the present disclosure.
FIG. 3 is a diagram showing a busbar according to a first embodiment of the present disclosure.
FIG. 4 is a diagram showing a busbar according to a second embodiment of the present disclosure.
FIG. 5 is a diagram showing a busbar according to a third embodiment of the present disclosure.
FIG. 6 is a diagram showing a busbar according to a fourth embodiment of the present disclosure.
FIG. 7 is a diagram showing a busbar according to a fifth embodiment of the present disclosure.
FIG. 8 is a diagram showing a busbar according to a sixth embodiment of the present disclosure.
FIG. 9 is a diagram showing a busbar according to a seventh embodiment of the present disclosure.
FIG. 10 is a diagram showing a busbar according to an eighth embodiment of the present disclosure.
FIG. 11 is a diagram showing a busbar according to a ninth embodiment of the present disclosure.
FIG. 12 is a partial exploded view of a battery rack according to an embodiment of the present disclosure.
FIG. 13 is a schematic cross-sectional view of FIG. 2, taken along the line A-A'.
FIG. 14 is a diagram showing a support member according to an embodiment of the present disclosure.
FIG. 15 is a diagram showing an insulation sheet according to an embodiment of the present disclosure.
FIG. 16 is a partial schematic diagram of a battery rack according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time that the application was filed.

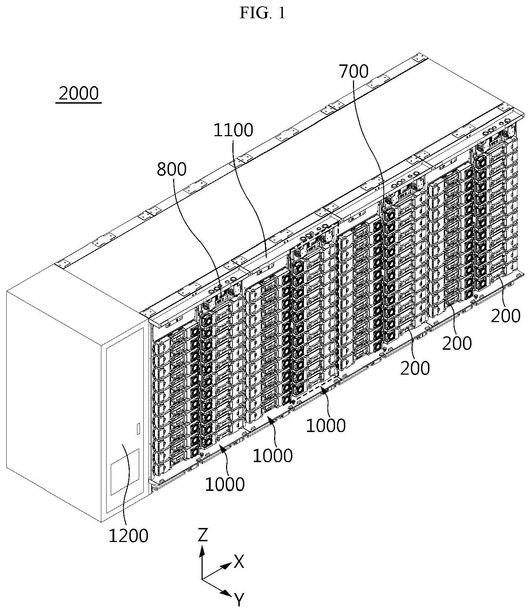

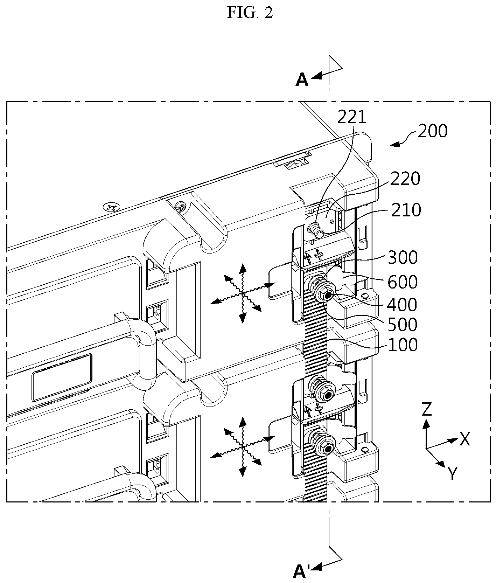

FIG. 1 is a perspective view of a battery container 2000 of the present disclosure. FIG. 2 is a partial enlarged view of a battery rack 1000 of the present disclosure. Referring to FIGS. 1 and 2, the battery rack 1000 according to an embodiment of the present disclosure may include a plurality of battery modules 200 and a busbar 100.

The battery rack 1000 may include the plurality of battery modules 200 to increase capacity and/or output. The plurality of battery modules 200 may be electrically connected in series and/or in parallel through a connection member such as the busbar 100 or a cable.

At least portion of the plurality of battery modules 200 may be stacked in the up-down direction to form the battery rack 1000. That is, the battery rack 1000 may include at least two battery modules 200 stacked in the up-down direction or Z axis direction. For example, thirteen battery modules 200 may be stacked in the up-down direction to form one battery rack 1000.

Additionally, the battery rack 1000 may include a plurality of battery racks 1000 arranged in the horizontal direction. That is, the plurality of battery modules 200 may be divided into groups, and each battery rack 1000 may be present in each group. Additionally, the plurality of battery racks 1000 may be arranged in the horizontal direction. For example, referring to the illustration shown in FIG. 1, the battery container 2000 may include eight battery racks 1000, and the eight battery racks 1000 may be arranged spaced a predetermined distance apart from one another in the left-right direction or X axis direction. In this instance, each battery rack 1000 may include twelve or thirteen battery modules 200. In this instance, the number of battery modules 200 stacked or the number of battery racks 1000 arranged in the horizontal direction may be variously set depending on conditions or situations such as the specification of the battery rack 1000 or the purpose of mounting, the specification of the battery container 2000 or the purpose of mounting, or the specification, characteristics or type of the battery module 200.

Each of the plurality of battery modules 200 may have a coupling bar 210 protruding frontwards. One battery module 200 may have two coupling bars 210. The coupling bars 210 may correspond to (+) terminal 220 (see FIG. 2) and (-) terminal 220 of the battery module. For example, the coupling bar 210 may be a fastener such as a bolt. Each battery module 200 may be physically or electrically connected to the adjacent battery module 200 through the coupling bar 210. The busbar 100 may be coupled to the coupling bar 210 of each of two adjacent battery modules 200 among the plurality of battery modules 200. The adjacent battery modules 200 may be two battery modules 200 closest to each other in the up-down direction or in the stack direction of the plurality of battery modules.

Additionally, the busbar 100 may be movably coupled to the coupling bar 210 of each of two adjacent battery modules 200 among the plurality of battery modules 200 in the front-rear direction or Y axis direction. Specifically, the busbar 100 may have two holes 101, and each of the two coupling bars 210 may pass through the hole 101. The busbar 100 may physically connect the two coupling bars 210. Additionally, the busbar 100 may move in the front-rear direction along the coupling bars 210 through the holes 101. The plurality of battery modules 200 may be connected to one another in the stack direction through the busbar 100.

Additionally, the busbar 100 may be made of a metal. Thus, the busbar 100 may electrically connect the adjacent battery modules 200.

Additionally, the busbar 100 may have flexibility. Thus, the busbar 100 may compress, stretch or bend in many direction and restore to the original shape.

Conventionally, the battery rack or the battery container has been transported, delivered or moved without connection between the battery modules. If the transport, delivery or movement is performed with the battery modules connected to one another, the busbar may be damaged due to vibration or impacts, causing fires or flames. Accordingly, after the transport, delivery or movement of the battery rack or the battery container, it is necessary to perform an installation process of connecting the battery modules with the busbar.

According to the above-described configuration of the present disclosure, it may be possible to transport, deliver or move the battery rack 1000 in a state that the plurality of battery modules 200 is connected with the busbar 100. Since the busbar 100 has flexibility, the busbar 100 may absorb vibration or impacts occurring during transport, delivery or movement of the battery rack 1000. In particular, since the busbar 100 is movably coupled to the coupling bar 210 in the front-rear direction, the busbar 100 may easily absorb or relieve vibration or impacts that may occur in the front-rear direction.

Additionally, according to the above-described configuration of the present disclosure, it may be possible to improve the economic efficiency in transporting, delivering or moving the battery rack 1000. It may be possible to eliminate the need to perform the installation process of connecting the battery modules 200 to the busbar 100 after the transport, delivery or movement of the battery rack 1000, thereby saving the effort and time.

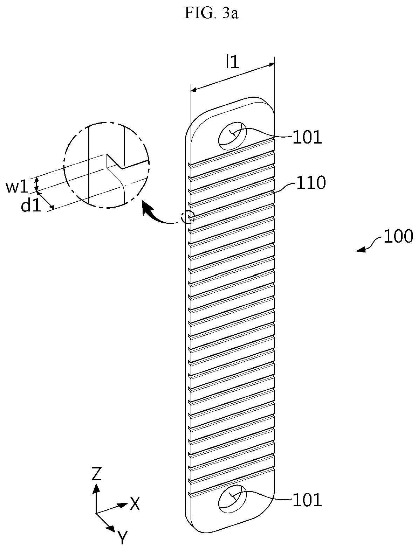

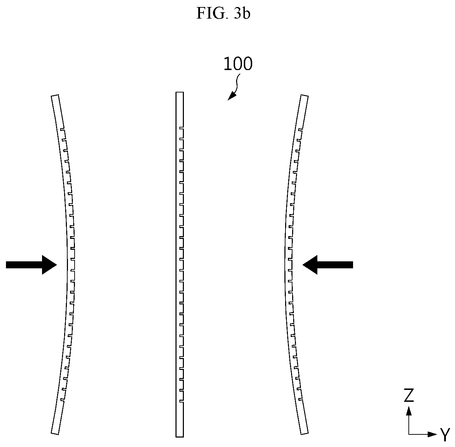

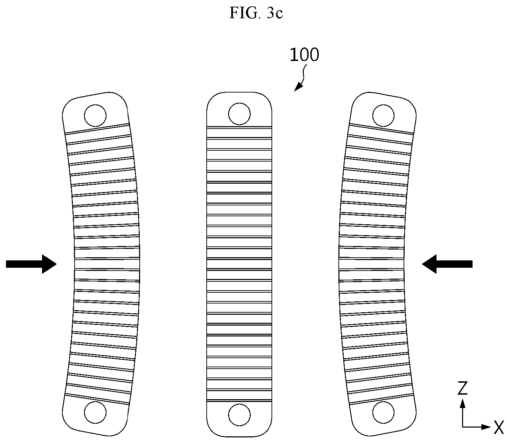

FIG. 3 is a diagram showing the busbar 100 according to a first embodiment of the present disclosure. FIG. 3a is a perspective view of the busbar 100, FIG. 3b is a side view of the busbar 100, and FIG. 3c is a front view of the busbar 100. Referring to FIGS. 2 and 3, the busbar 100 of the battery rack 1000 according to an embodiment of the present disclosure may include a plurality of first grooves 110.

The busbar 100 may extend in the stack direction of the plurality of battery modules 200 or Z axis direction. The busbar 100 may be in a shape of a flat bar. The busbar 100 may include the first groove 110 in a direction perpendicular to the lengthwise direction of the busbar 100. Additionally, the first groove 110 may be formed in the front surface of the busbar 100. Alternatively, the direction in which the first groove 110 is formed and the lengthwise direction of the busbar 100 may be perpendicular to each other. Additionally, the first groove 110 may include the plurality of first grooves 110. The plurality of first grooves 110 may be arranged along the lengthwise direction of the busbar 100. Additionally, the plurality of first grooves 110 may be disposed between the two holes 101. In particular, the plurality of first grooves 110 may be arranged at the equal interval. Additionally, the plurality of first grooves 110 may have the same depth d1. Additionally, the plurality of first grooves 110 may have the same width w1. Additionally, the plurality of first grooves 110 may have the same length l1. In this instance, the cross section of the first grooves 110 in the lengthwise direction of the busbar 100 may be rectangular in shape.

According to the above-described configuration of the present disclosure, it may be possible to improve the flexibility of the busbar 100. Accordingly, the busbar 100 may absorb vibration or impacts occurring during transport, delivery or movement of the battery rack 1000. In particular, referring to FIG. 3(b), when impacts are applied to the busbar 100 in y axis direction, the busbar 100 may easily absorb or relieve the impacts. Additionally, referring to FIG. 3(c), when impacts are applied to the busbar 100 in X axis direction, the busbar 100 may easily absorb or relieve the impacts.

Additionally, according to the above-described configuration of the present disclosure, since the plurality of first grooves 110 is formed with the same shape, depth d1, width w1 and length l1 and arranged at the equal interval, the busbar 100 may have uniform flexibility.

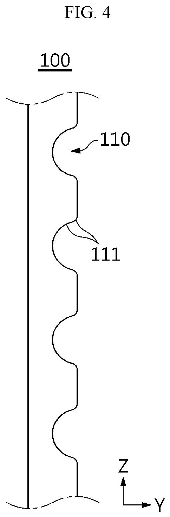

FIG. 4 is a diagram showing the busbar 100 according to a second embodiment of the present disclosure. Referring to FIGS. 2 and 4, the busbar 100 of the battery rack 1000 according to an embodiment of the present disclosure may include the plurality of first grooves 110.

Referring to FIGS. 2 and 4, the busbar 100 of the battery rack 1000 according to an embodiment of the present disclosure may include the first grooves having a curved surface. Additionally, the cross section of the first grooves 110 in the lengthwise direction of the busbar 100 may be in a curved shape having a round portion 111.

According to the above-described configuration of the present disclosure, it may be possible to improve durability of the busbar 100. Thus, the busbar 100 may stably maintain its shape without cracking (c) even though the busbar repeatedly bends and returns to the original shape.

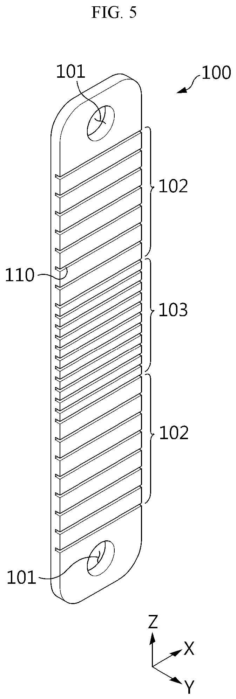

FIG. 5 is a diagram showing the busbar 100 according to a third embodiment of the present disclosure. Referring to FIGS. 2 and 5, the busbar 100 of the battery rack 1000 according to an embodiment of the present disclosure may include the plurality of first grooves 110.

The plurality of first grooves 110 may be arranged along the lengthwise direction of the busbar 100. In this instance, the interval at which the plurality of first grooves 110 is arranged may not be equal. For example, the interval of the first grooves 110 at a central part 103 of the busbar 100 may be smaller than the interval of the first grooves 110 at an area 102 adjacent to the hole 101 of the busbar 100 or a peripheral part 102. Alternatively, for example, the density of the first grooves 110 at the central part 103 of the busbar 100 may be higher than the density of the first grooves 110 at the peripheral part 102 of the busbar 100.

When the busbar 100 bends due to impacts, the amount of deformation at the central part 103 of the busbar 100 may be larger than the amount of deformation at the area 102 adjacent to the hole 101 of the busbar 100 or the peripheral part 102. According to the above-described configuration of the present disclosure, the busbar 100 may deform more easily at the central part 103 than the peripheral part 102, and may effectively absorb or relieve the impacts.

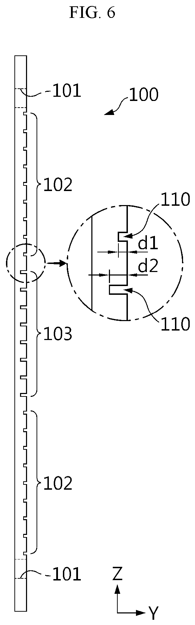

FIG. 6 is a diagram showing the busbar 100 according to a fourth embodiment of the present disclosure. Referring to FIGS. 2 and 6, the busbar 100 of the battery rack 1000 according to an embodiment of the present disclosure may include the plurality of first grooves 110.

The plurality of first grooves 110 may be arranged along the lengthwise direction of the busbar 100. In this instance, the depth d1, d2 of the plurality of first grooves 110 may not be equal.

For example, the depth d2 of the first grooves 110 at the central part 103 of the busbar 100 may be larger than the depth d1 of the first grooves 110 at the peripheral part 102 of the busbar 100.

When the busbar 100 bends due to impacts, the amount of deformation at the central part 103 of the busbar 100 may be larger than the amount of deformation at the peripheral part 102 of the busbar 100. According to the above-described configuration of the present disclosure, the busbar 100 may deform more easily at the central part 103 than the peripheral part 102, and may effectively absorb or relieve the impacts.

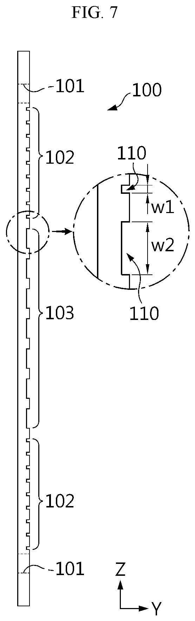

FIG. 7 is a diagram showing the busbar according to a fifth embodiment of the present disclosure. Referring to FIGS. 2 and 7, the busbar 100 of the battery rack 1000 according to an embodiment of the present disclosure may include the plurality of first grooves.

The plurality of first grooves 110 may be arranged along the lengthwise direction of the busbar 100. In this instance, the widths w1, w2 of the plurality of first grooves 110 may not be equal.

For example, the width w2 of the first grooves 110 at the central part 103 of the busbar 100 may be larger than the width w1 of the first grooves 110 at the peripheral part 102 of the busbar 100.

When the busbar 100 bends due to impacts, the amount of deformation at the central part 103 of the busbar 100 may be larger than the amount of deformation at the peripheral part 102 of the busbar 100. According to the above-described configuration of the present disclosure, the busbar 100 may deform more easily at the central part 103 than the peripheral part 102, and may effectively absorb or relieve the impacts.

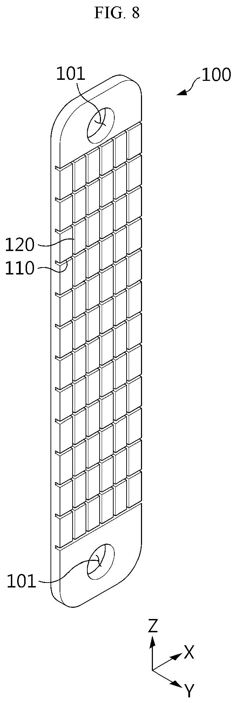

FIG. 8 is a diagram showing the busbar 100 according to a sixth embodiment of the present disclosure. Referring to FIGS. 2 and 8, the busbar 100 of the battery rack 1000 according to an embodiment of the present disclosure may include the first grooves 110 and second grooves 120.

The second groove 120 may be formed in a direction perpendicular to the plurality of first grooves 110. Additionally, the second groove 120 may extend along the lengthwise direction of the busbar 100. Additionally, the second groove 120 may include a plurality of second grooves 120. Alternatively, the second grooves 120 may be formed in the lengthwise direction of the busbar 100 or the direction perpendicular to the first grooves 110 or Z axis direction. Alternatively, the second grooves 120 may be perpendicular to the first grooves 110.

The second grooves 120 may be formed in the same surface as the first grooves 110. For example, the first groove 110 and the second groove 120 may be formed in the front surface of the busbar 100.

The plurality of second grooves 120 may be arranged in the direction perpendicular to the lengthwise direction of the busbar 100. Additionally, the plurality of second grooves 120 may be disposed between the two holes 101. In particular, the plurality of second grooves 120 may be arranged at the equal interval. Additionally, the plurality of second grooves 120 may have the same depth. Additionally, the plurality of second grooves 120 may have the same width. Additionally, the plurality of second grooves 120 may have the same length. In this instance, the cross section of the second grooves 120 in the direction perpendicular to the lengthwise direction of the busbar 100 may be rectangular in shape. The first grooves 110 and the second grooves 120 may form a grid of grooves.

According to the above-described configuration of the present disclosure, it may be possible to improve the flexibility of the busbar 100 to impacts or vibration in X axis direction. Accordingly, the busbar 100 may absorb or relieve vibration or impacts occurring during transport, delivery or movement of the battery rack 1000 more effectively.

Additionally, according to the above-described configuration of the present disclosure, since the plurality of second grooves 120 is formed with the same shape, depth, width and length and arranged at the equal interval, the busbar 100 may have uniform flexibility.

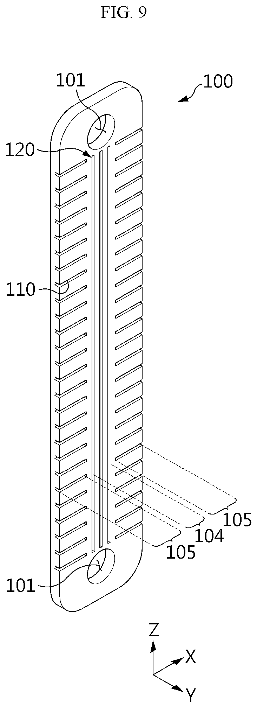

FIG. 9 is a diagram showing the busbar 100 according to a seventh embodiment of the present disclosure. Referring to FIGS. 2 and 9, the busbar 100 of the battery rack 1000 according to an embodiment of the present disclosure may include the first grooves 110 and the second grooves 120.

The second grooves 120 may be formed between the first grooves 110. Additionally, the second grooves 120 may be formed in the central part 104 of the busbar 100, and the first grooves 110 may be formed in the peripheral part 105 of the busbar 100. Additionally, the first grooves 110 and the second grooves 120 may not be perpendicular to each other. Additionally, the second grooves 120 may be disposed between the first grooves 110.

According to the above-described configuration of the present disclosure, it may be possible to improve the flexibility of the busbar 100 to impacts or vibration in X axis direction.

Additionally, according to the above-described configuration of the present disclosure, it may be possible to minimize the stiffness reduction since the busbar 100 includes the second grooves 120.

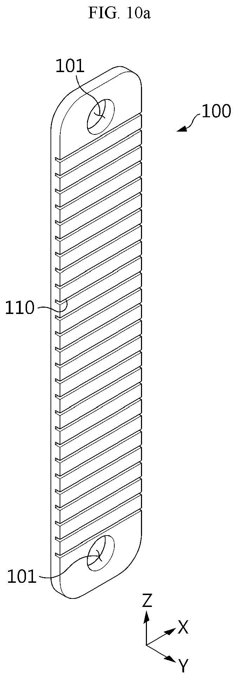

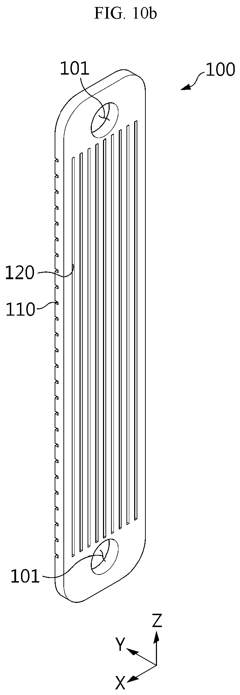

FIG. 10 is a diagram showing the busbar 100 according to an eighth embodiment of the present disclosure. FIG. 10a is a perspective view showing the front surface of the busbar 100, and FIG. 10b is a perspective view showing the rear surface of the busbar 100. Referring to FIGS. 2 and 10, the busbar 100 of the battery rack 1000 according to an embodiment of the present disclosure may include the first grooves 110 and the second grooves 120.

The first grooves 110 and the second grooves 120 may be formed in different surfaces of the busbar 100. For example, when the first grooves 110 are formed in the front surface of the busbar 100, the second grooves 120 may be formed in the rear surface of the busbar.

According to the above-described configuration of the present disclosure, it may be possible to improve the flexibility of the busbar 100 to impacts or vibration in X axis direction.

Additionally, according to the above-described configuration of the present disclosure, compared to the busbar 100 including the first grooves 110 and the second grooves 120 in the same surface, the busbar 120 may have the improved stiffness.

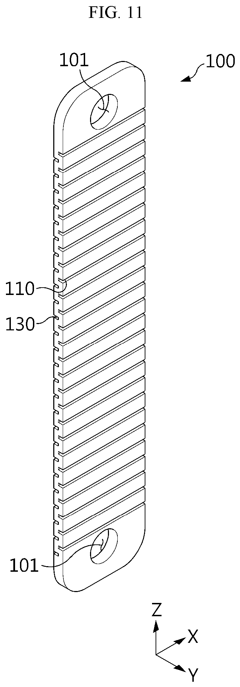

FIG. 11 is a diagram showing busbar 100 according to a ninth embodiment of the present disclosure. Referring to FIGS. 2 and 11, the busbar 100 of the battery rack 1000 according to an embodiment of the present disclosure may include the first grooves 110 and third grooves 130.

The third groove 130 may be formed in the direction perpendicular to the lengthwise direction of the busbar 100. Additionally, the third groove 130 may be formed in the rear surface of the busbar 100. Alternatively, the direction in which the third groove 130 is formed and the lengthwise direction of the busbar 100 may be perpendicular to each other. Additionally, the third groove 130 may include a plurality of third grooves 130. The plurality of third grooves 130 may be arranged along the lengthwise direction of the busbar 100. Additionally, the plurality of third grooves 130 may be disposed between the two holes 101. In particular, the plurality of third grooves 130 may be arranged at the equal interval. Additionally, the plurality of third grooves 130 may be formed with the same depth, width and length. Additionally, the plurality of third grooves 130 may have the same depth, width and length as the first grooves 110. In this instance, the cross section of the third grooves 130 may be rectangular in shape along the lengthwise direction of the busbar 100.

The first grooves 110 and the third grooves 130 may be formed in different surfaces of the busbar 100. For example, the first grooves 110 may be formed in the front surface of the busbar 100, and the third grooves 130 may be formed in the rear surface of the busbar 100.

The plurality of first grooves 110 and the plurality of third grooves 130 may be arranged in an alternating manner. Additionally, the plurality of first grooves 110 and the plurality of third grooves 130 may be arranged at the equal interval in an alternating manner.

According to the above-described configuration of the present disclosure, compared to the busbar 100 including only the first grooves 110 or only the third grooves 130, the busbar 100 may have a significant improvement in flexibility.

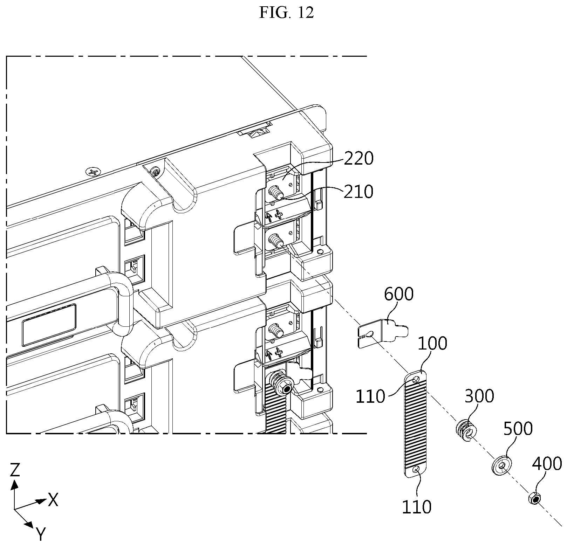

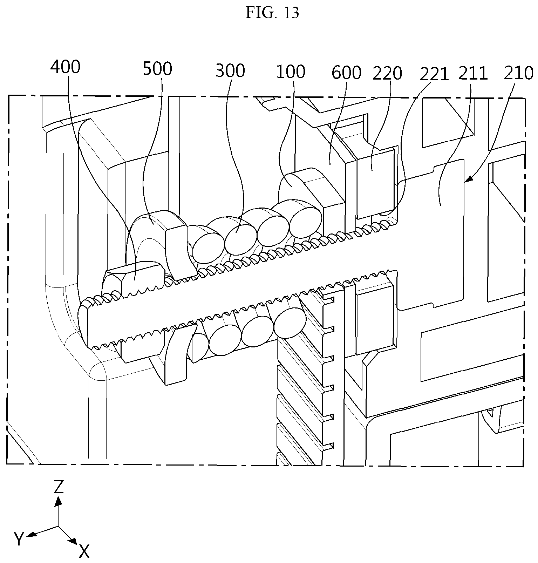

FIG. 12 is a partial exploded view of the battery rack 1000 of the present disclosure. FIG. 13 is a schematic cross-sectional view of FIG. 2, taken along the line A-A'. Referring to FIGS. 12 and 13, the battery rack 1000 according to an embodiment of the present disclosure may include a coil spring 300 to provide a restoring force that pushes the busbar 100 back. The coil spring 300 may be inserted into the coupling bar 210. The coil spring 300 in compressed state may be coupled to the coupling bar 210. Additionally, the rear side of the coil spring 300 may contact the front surface of the busbar 100. Additionally, the restoring force of the compressed coil spring 300 may push the busbar 100 back. Alternatively, the restoring force of the compressed coil spring 300 may push the busbar 100 in -Y axis direction.

According to the above-described configuration of the present disclosure, the coil spring 300 may stably support the busbar 100. The coil spring 300 may restore the busbar 100 to the original location when the busbar 100 moves in the front-rear direction along the coupling bar 210 due to vibration or movement of the battery rack 1000. Accordingly, the busbar 100 may absorb or relieve vibration or impacts while maintaining the stably coupled state.

Referring to FIGS. 12 and 13, the coupling bar 210 of the battery rack 1000 according to an embodiment of the present disclosure may have screw threads. The screw threads may be formed along a direction in which the coupling bar 210 protrudes. In this instance, the coupling bar 210 may be a fastener or a bolt. At least a portion of the coupling bar 210 may be located inside the battery module 200. For example, the coupling bar 210 may have a head 211 at the rear side, and the head 211 may be located, secured or coupled to the inside of the battery module 200.

Additionally, the battery rack 1000 may include a nut 400 that is coupled to the screw threads. The nut 400 may be located in front of the coil spring 300.

According to the above-described configuration of the present disclosure, the nut 400 may prevent the components coupled to the coupling bar 210 from be separated from the coupling bar 210. Accordingly, the coil spring 300 or the busbar 100 coupled to the coupling bar 210 may be stably supported during movement in the front-rear direction.

Referring to FIGS. 12 and 13, the battery rack 1000 according to an embodiment of the present disclosure may include a support member 500. The support member 500 may be located between the nut 400 and the coil spring 300. The support member 500 may include a coupling hole 501. Additionally, the coupling bar 210 may pass through the coupling hole 501. Additionally, the support member 500 may move in the front-rear direction along the coupling bar 210. The front side of the support member 500 may be supported by the nut 400. Accordingly, the support member 500 is not separated from the coupling bar 210 and may be stably kept coupled. Additionally, the support member 500 may support the coil spring 300. The diameter of the support member 500 may be larger than the diameter of the coil spring 300.

According to the above-described configuration of the present disclosure, the support member 500 may prevent the coil spring 300 from being separated from the coupling bar 210. Accordingly, the coil spring 300 may stably provide the restoring force to the busbar 100.

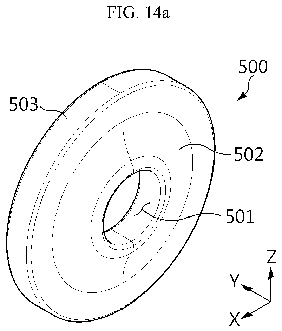

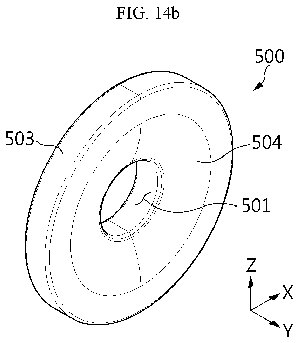

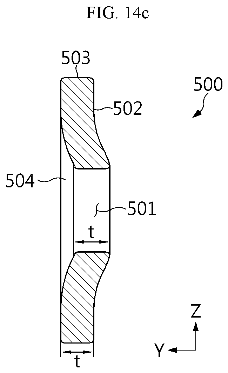

FIG. 14 is a diagram showing the support member 500 according to the present disclosure. FIG. 14a is a perspective view showing the front surface of the support member, FIG. 14b is a perspective view showing the rear surface of the support member, and FIG. 14c is a schematic cross-sectional view taken along the line B-B'. Referring to FIGS. 12 to 14, the support member 500 of the battery rack 1000 according to an embodiment of the present disclosure may be a disc spring 500. The support member 500 may provide the restoring force that pushes the coil spring 300 back. Alternatively, the support member 500 may be a leaf spring 500. Alternatively, the support member 500 may be a washer 500 having flexibility. Alternatively, the support member 500 may be a spring washer 500.

The front surface 504 of the support member 500 may protrude rearwards. Alternatively, the front surface 504 of the support member 500 may protrude in -Y axis direction. The rear surface 502 of the support member 500 may protrude rearwards. Alternatively, the front surface 504 of the support member 500 may protrude in -Y axis direction. A circumferential surface 503 may connect the front surface 504 to the rear surface 502. The front surface 504 and the rear surface 502 may have the same shape. For example, the circumference of the front surface 504 may be circular in shape. Additionally, the circumference of the rear surface 502 may be circular in shape. The thickness t of the support member 500 may be uniform all over the support member 500. For example, the thickness t at the outermost side of the support member 500 may be equal to the thickness t around the coupling hole 501 of the support member 500. When the support member 500 is subjected to a force in the front direction, the support member 500 may provide the restoring force in the rear direction. When the support member 500 is subjected to a force in +Y axis direction, the support member 500 may provide the restoring force in -Y axis direction.

According to the above-described configuration of the present disclosure, it may be possible to increase the restoring force that pushes the busbar 100 back. In the case where the battery rack 1000 is moved or used for a long term, the restoring force of the coil spring 300 may become weaker. When the restoring force of the coil spring 300 becomes weaker, the busbar 100 may not be stably supported. In this instance, when the restoring force of the support member 500 is applied, the busbar 100 may be stably supported even though the restoring force of the coil spring 300 is weak. The restoring force of the support member 500 may be maintained for a longer term than the restoring force of the coil spring 300.

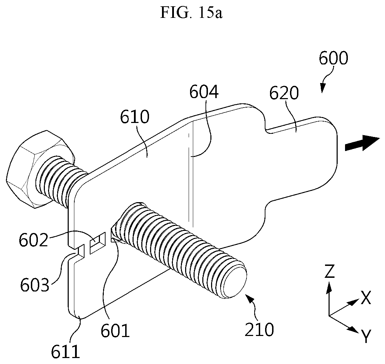

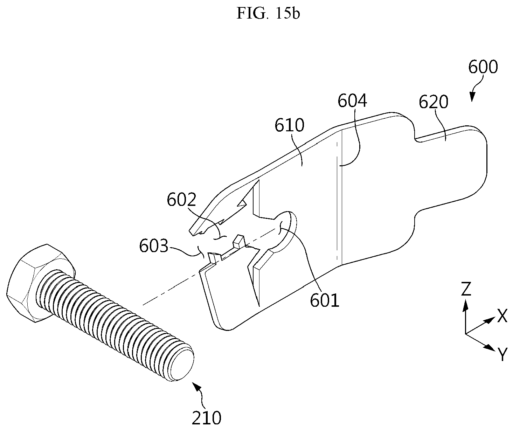

FIG. 15 is a diagram showing an insulation sheet according to the present disclosure. FIG. 15a is a diagram showing the insulation sheet coupled to the coupling bar, and FIG. 15b is a diagram showing the insulation sheet removed from the coupling bar. Referring to FIGS. 12, 13 and 15, the battery rack 1000 according to an embodiment of the present disclosure may include the terminal 220 and the insulation sheet 600.

The battery module 200 may include the terminal 220. The terminal 200 may be formed in the outer surface of the battery module 200. Additionally, the terminal 220 may be adjacent to the coupling bar 210. Additionally, the terminal 200 may include a terminal hole 221. The coupling bar 210 may pass through the terminal hole 221. The diameter of the terminal hole 221 may be larger than the diameter of the coupling bar 210. Thus, the terminal 220 may not contact the coupling bar 210. Additionally, the head 211 of the coupling bar 210 may be located inside the battery module 200. Additionally, at least a portion of a cover that forms the outer surface of the battery module 200 may be located between the head 211 and the terminal 220. For example, in the process of molding the cover of the battery module 200, the head 211 may be inserted into the cover of the battery module 200 and may not be exposed to the outside of the battery module 200. Thus, the terminal 220 and the head 211 may not contact each other. That is, the terminal 220 and the coupling bar 210 may not be electrically connected to each other.

The insulation sheet 600 may be located between the terminal 220 and the busbar 100. The insulation sheet 600 may be coupled to the coupling bar 210. The insulation sheet 600 may be made of a material having electrically insulating properties. Additionally, the diameter of the insulation sheet 600 may be larger than the diameter of the terminal 220. Additionally, the diameter of the insulation sheet 600 may be larger than the width of the busbar 100. The insulation sheet 600 may prevent contact between the busbar 100 and the terminal 220. The area of the insulation sheet 600 may be large enough to prevent contact between the busbar 100 and the terminal 220. Additionally, the insulation sheet 600 may electrically insulate the busbar 100 from the terminal 220.

According to the above-described configuration of the present disclosure, it may be possible to prevent electrical connection between the plurality of battery modules 200, and keep the battery rack 1000 electrically inactive. The battery rack 1000 may be electrically stable during transport, delivery, movement or storage of the battery rack 1000.

Referring to FIGS. 12, 13 and 15, the insulation sheet 600 may include an insulation portion 610 and a handle portion 620. The insulation portion 610 may contact at least one of the busbar 100 or the terminal 220. The handle portion 620 may be an extended portion from a peripheral portion 611 of the insulation portion 610. The handle portion 620 and the insulation portion 610 may be divided by a folding line 604. The handle portion 620 may extend to a sufficient length from the insulation portion 610 to allow a user to easily hold and pull the insulation sheet 600. Additionally, the insulation sheet 620 may be folded along the folding line 604, and the handle portion 620 may be inclined with respect to the insulation portion 610. For example, the handle portion 620 may be inclined frontwards with respect to the insulation portion 610. Accordingly, it may be possible to allow the user to hold the handle portion 620 more easily.

The diameter of a first hole 601 may be larger than the diameter of the coupling bar 210. For example, the first hole 601 may protrude or extend to the peripheral portion 611 of the insulation portion 610. Alternatively, the first hole 601 may protrude or extend to - X axis. Thus, when the user pulls the insulation sheet 600 in +X axis direction, the insulation sheet 600 may be separated or removed from the coupling bar 210 more easily.

A second hole 602 may be formed in the direction in which the first hole 601 protrudes or extends. Thus, when the user pulls the insulation sheet 600 in +X axis direction, the insulation sheet 600 may be separated or removed from the coupling bar 210 more easily.

A third hole 603 may be formed in the direction in which the first hole 601 protrudes or extends. Additionally, the third hole 603 may be located between the second hole 602 and the peripheral portion 611. For example, the third hole 603 may be formed such that at least a portion of the peripheral portion 611 is bent or recessed toward the second hole 602. Alternatively, the third hole 603 may be formed such that at least a portion of the peripheral portion 611 is notched toward the second hole 602. Thus, when the user pulls the insulation sheet 600 in +X axis direction, the first hole 601 and the second hole 602 may be disconnected. Additionally, the second hole 602 and the third hole 603 may be disconnected.

Referring to FIGS. 12, 13 and 15, the insulation sheet 600 of the battery rack 1000 according to an embodiment of the present disclosure may include the first hole 601 and the second hole 602.

The coupling bar 210 may pass through the first hole 601. The first hole 601 may be formed at the central part of the insulation sheet 600. The first hole 601 may be referred to as an insulation hole 601. The second hole 602 may be adjacent to the first hole 601. The second hole 602 may be referred to as a guide hole 602. Additionally, the second hole 602 may include a plurality of second holes 602. Additionally, the second hole 602 may include a plurality of second holes 602 between the edge of the insulation sheet 600 and the first hole 601. Additionally, the second hole 602 may extend to the edge of the insulation sheet 600.

According to the above-described configuration of the present disclosure, the user of the battery rack 1000 may easily separate or remove the insulation sheet 600 from the coupling bar 210 without separating the component such as the nut 400, the support member 500, the coil spring 300 or the busbar 100 from the coupling bar 210.

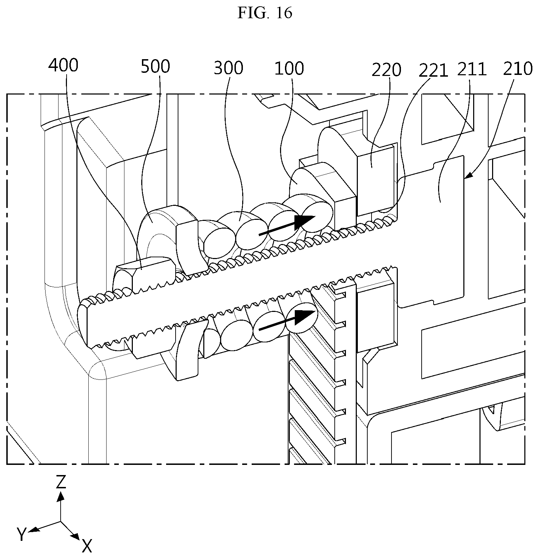

FIG. 16 is a partial schematic diagram of the battery rack 1000 according to an embodiment of the present disclosure. For example, FIG. 16 is a cross-sectional view showing a variation of FIG. 2, taken along the line A-A'. Referring to FIGS. 13 and 16, the battery rack 1000 according to an embodiment of the present disclosure may include the terminal 220 and the busbar 100.

The battery module 200 may include the terminal disposed in the outer surface of the battery module 200 and located adjacent to the coupling bar 100. Additionally, the busbar 100 may contact the terminal 220. Additionally, the busbar 100 may be electrically connected to the terminal 220.

The battery rack 1000 of FIG. 16 may be free of the insulation sheet 600 of FIG. 13. When the insulation sheet 600 is removed, the busbar 100 may move back due to the restoring force of at least one of the coil spring 300 or the support member 500. Thus, the busbar 100 may contact the terminal 220. Additionally, the busbar 100 may be supported in contact with the terminal 220 due to the restoring force of at least one of the coil spring 300 or the support member 500.

According to the above-described configuration of the present disclosure, the battery rack 1000 may be electrically activated when the user removes the insulation sheet 600 from the coupling bar 210 by pulling the insulation sheet 600. Accordingly, it may be possible to install the battery rack 1000 rapidly and easily, thereby saving the effort and time.

Referring to FIG. 1, the battery rack 1000 according to the present disclosure may further include a rack frame 700 to secure, support or install the plurality of battery modules 200. Additionally, the battery rack 1000 according to the present disclosure may include a battery management system (BMS) 800 to control the plurality of battery modules 200. For example, each one BMS 800 may be provided for two battery racks 1000.

Referring to FIG. 1, the battery container 2000 according to the present disclosure may include the battery rack 1000 according to the present disclosure. The battery rack 1000 may include a plurality of battery racks 1000. The battery container 2000 may include a container housing 1100. The container housing 1100 may provide an accommodation space for accommodating the battery rack 1000. Additionally, the battery container 2000 may include a control unit 1200 to control the plurality of battery racks 1000. Besides, the battery container 2000 may further include a sensor to detect the condition of the battery rack 1000 or a fire extinguishing module to control thermal events.

An energy storage system (ESS) according to the present disclosure may include the battery rack 1000 according to the present disclosure. The energy storage system may include a plurality of battery containers 2000. Additionally, the battery container 2000 may include a plurality of battery racks 1000. In the energy storage system, a combination of a predetermined number of battery containers 2000 and control containers may form a link group. In an example, the control container may perform full control or diagnosis of the battery container 2000. Additionally, the control container may include a direct current (DC) part, an alternating current (AC) part and a battery system controller (BSC) part to control the battery container 2000. Meanwhile, each control container may be connected to a power conversion system (PCS).

The terms indicating directions such as upper, lower, left, right, front and rear are used for convenience of description, but it is obvious to those skilled in the art that the terms may change depending on the position of the stated element or an observer.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

## Claims

1. A battery rack, comprising:
a plurality of battery modules stacked along an up-down direction, each battery module including a coupling bar protruding frontwards; and
a busbar movably coupled to the coupling bar of each of two adjacent battery modules among the plurality of battery modules along a front-rear direction, made of a metal and having flexibility.

2. The battery rack according to claim 1, wherein the busbar includes a plurality of first grooves along a direction perpendicular to a lengthwise direction of the busbar.

3. The battery rack according to claim 2, wherein the busbar further includes a plurality of second grooves along a direction perpendicular to the plurality of first grooves and extending along the lengthwise direction of the busbar.

4. The battery rack according to claim 2, wherein the plurality of first grooves is formed in a front surface of the busbar, and
wherein the busbar further includes a plurality of third grooves in a rear surface of the busbar along the direction perpendicular to the lengthwise direction of the busbar.

5. The battery rack according to claim 1, further comprising:
a coil spring to provide a restoring force that pushes the busbar back.

6. The battery rack according to claim 5, wherein the battery module includes a terminal in an outer surface of the battery module and adjacent to the coupling bar, and
wherein the busbar contacts the terminal, and is electrically connected to the terminal.

7. The battery rack according to claim 5, wherein the coupling bar has screw threads, and
wherein the battery module further includes a nut in front of the coil spring and coupled to the screw threads.

8. The battery rack according to claim 7, further comprising:
a support member between the nut and the coil spring.

9. The battery rack according to claim 8, wherein the support member is a disc spring for providing the restoring force that pushes the coil spring back.

10. The battery rack according to claim 1, wherein the battery module includes a terminal in an outer surface of the battery module and adjacent to the coupling bar, and
wherein the battery rack further comprises an insulation sheet between the terminal and the busbar.

11. The battery rack according to claim 10, wherein the insulation sheet includes:
a first hole which allows the coupling bar to pass through; and
a second hole adjacent to the first hole.

12. A battery container comprising the battery rack according to any one of claims 1 to 11.

13. An energy storage system comprising the battery rack according to any one of claims 1 to 11.
